# EUROPEAN PATENT APPLICATION

(11) **EP 2 360 919 A1**
(43) Date of publication of application: **24.08.2011**
(21) Application number: 09306343.6
(22) Date of filing: 29.12.2009
(51) Int. Cl.: H04N 7/167

(54) **Device and method for providing played audio and/or video data**

(71) Applicant: Gemalto SA, 92190 Meudon (FR)
(72) Inventor: Faure, Frédéric, 13260 Cassis (FR)

(57) **Abstract**

The invention relates to a device 10 for providing played audio and/or video data.

According to the invention, the device is adapted to play 24 audio and/or video data, and send 26 at least a part of the played audio and/or video data.

The invention also relates to a corresponding method for providing played audio and/or video data.

## Description

### Field of the invention:

The invention relates, in a general manner, to a device for providing played audio and/or video data.

Moreover, the invention also relates to a method for providing played audio and/or video data.

The present invention is notably applicable within a mobile radio-telecommunication field in which the device is a mobile terminal, such as a mobile telephone (or phone).

### State of the art:

As known per se in the mobile radio-telecommunication field, an instant messaging application allows to send notably an audio file from a mobile phone calling another mobile phone.

Such a solution involves that an instant messaging application is installed on both mobile phones, so that the mobile phone that receives the audio file plays the audio file.

However, due to compatibility issues, some mobile phones are not able to support the same instant messaging application or the same corresponding data exchange protocol. These mobile phones are therefore not able to play the audio file.

Thus, there is a need to play an audio file, and more generally a media file, while a mobile phone is not equipped with an audio and/or video player file.

### Summary of the invention:

The invention proposes a solution for satisfying the just hereinabove specified need by providing a device for providing played audio and/or video data.

According to the invention, the device is adapted to play audio and/or video data, and send to at least one external entity at least a part of the played audio and/or video data.

The principle of the invention consists in that an audio and/or video file is played at least in part and transmitted by a device equipped with an audio and/or video player to another entity or device. One device(s) receive(s) played audio and/or video data originating from the device that sends the played audio and/or video data.

Within the present description, "to play audio and/or video data" means "to read audio and/or video data", so that the read audio and/or video data can be listened and/or seen by a person (or people).

It is to be noted that a sent data stream originating from a sender and intended to another receiver(s) comprises audio and/or video data that either has been played or is being played at the sender device side.

Each of the receiver(s) that receives the sent data stream including the played audio and/or video data allows to let a user of the receiver device benefit from the played audio and/or video data (or consume it).

The invention solution makes it possible, thanks to played audio and/or video information addressed to a receiver device(s), to perceive played audio and/or video information at the receiver device(s) side.

The concerned receiver device user(s) benefit(s) from the remotely played audio and/or video data.

Thus, a user(s) of the receiver device(s) consume(s) the remotely played audio and/or video information.

It is to be noted that the receiver device(s) do not have to be equipped with an audio and/or video player, so as to benefit from the remotely played audio and/or video data.

Each consumer or following person may perceive the received played audio and/or video data, through the hearing and/or the eyesight.

According to a further aspect, the invention is a method for providing played audio and/or video data.

According to the invention, the method comprises the steps in which a first device plays audio and/or video data, and send to at least one second device at least a part of the played audio and/or video data.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one embodiment of a system comprising two mobile phones, as first and second devices, a first mobile phone, as first device, being adapted to transmit, according to the invention, played audio and/or video data to a second mobile phone, as second device;
- Figure 2 represents a simplified diagram of one embodiment of the first mobile phone, as first device, of figure 1, according to the invention; and
- Figure 3 is a simplified flow chart of one embodiment of the method implemented notably by the first device of figure 2 that allows a user of the second device to benefit from played audio and/or video data transported by a data stream that originates from the first device.

### Detailed description:

Herein under is considered a case in which the invention method for providing played audio and/or video data is implemented by a mobile phone, as first device.

Instead of being constituted by a mobile phone, the first device may be, for example, a Personal Computer (or PC), a desktop computer, a laptop computer, a set top box, a netbook and/or a Personal Digital Assistant (or PDA).

Naturally, the herein below described embodiment is only for exemplifying purposes and is not considered to reduce the scope of the present invention.

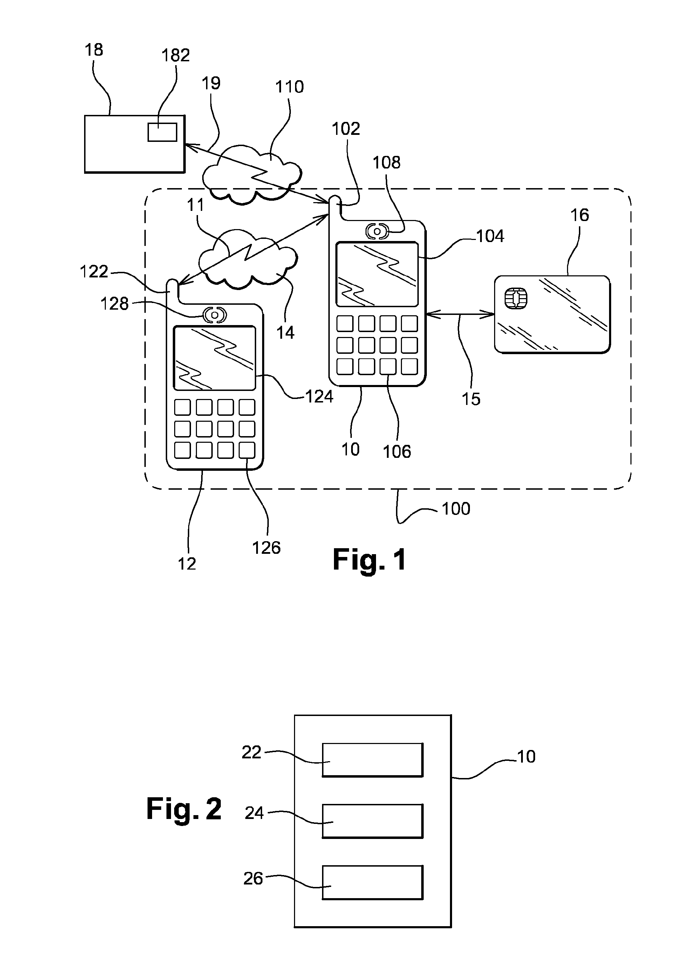

Figure 1 schematically shows a system 100 including two mobile phones 10 and 12, as electronic terminals.

For simplicity, the mobile phones 10 and 12 are termed hereinafter the phones 10 and 12.

According to the invention, the phone 10, as first device, acts as a sender of locally played audio and/or video data while the phone 12, as second device, is a receiver of the remotely played audio and/or video data.

The second device, instead of being the phone 12, may be, for example, a fixed line phone, an electronic book (or e-book) reading device, as reader of an electronic version of a printed book, a PC, a desktop computer, a laptop computer, a set top box, a netbook and/or a PDA.

Only one phone 12, as second device, has been represented.

However, the phone 10, as first device, may address several phones and/or other terminals, as second device(s), at one time, so as to provide this(these) latter(s) with played audio and/or video data, or termed hereinafter media data.

The phone 10, as first device, is able to play media data.

The phone 10 is further arranged for providing the other phone 12 with played media data, so that at least a user of the latter phone 12 benefits from the media data that is played at the side of the phone 10.

The media data comprises an audio sample(s), a song(s), a music(s), an image(s), a clip(s), a television (or TV) film(s) and/or a movie file(s), as media file(s).

The two phones 10, 12 are linked together.

For example, the two phones 10 and 12 are connected to each other, through a radio-communication network 14 and a long range radio-frequency link 11. This link 11 is at least unidirectional, namely from the phone 10, as sender of media data to be played, to the other phone 12, as receiver of the remotely played media data.

The phone 10 is preferably equipped with a display screen 104, a keyboard 106, a loudspeaker 108, as man machine interface(s).

The phone 10 may be equipped with (or connected to) a microphone (not represented) and/or a camera (not represented).

The man machine interfaces allow notably a phone user to interact with the phone 10.

The user of the phone 10 accesses the man machine interfaces, in order to be able to exploit the service relating to the application for reading media data and sending part or all of the read media data to an addressed entity(ties), like the other phone 12.

The user of the phone 10 may listen to audio data, and/or see image and/or video data, i.e. perceive some played media data, in order to choose or select the media file to be played that the user of the phone 10 desires to transmit to the other phone 12.

For the selection of the media file, the user of the phone 10 may perceive some media data when it is played, before a sending of the played media data from the phone 10 to the other phone 12, as addressed entity, while the user of the other phone 12 does not perceive the played media data (i.e. before receiving the remotely played media data that has been effectively selected).

The display screen 104 is used notably to display a library of media files that a user of the phone 10 may select so as to be played by the phone 10 itself.

The media files of the library may be stored locally, i.e. within the phone memories or a memory of a token (described hereinafter) coupled with the phone 10, and/or remotely within the remote server 18 (or accessible through the remote server 18).

The display screen 104 may be used to let display an image(s) and/or a video(s) originating from one selected media file that is being played by the phone 10 and also sent (possibly almost simultaneously) to the other phone 12.

In such a latter case, the users of the phones 10 and 12 see the played image and/or video data at the same time.

The sending of the played video data relating to, for example, a movie may occur during an established call, for example, during a video call conversation between the users of the involved phones 10 and 12, while using preferably the video conference communication channel, i.e. by using video data originating from the camera of the phone 10 (or the camera connected to the phone 10).

Thus, the sent data stream includes, besides, for example, video data relating to a possible video call conversation, played video data relating to the movie.

The keyboard 106, or another means for selecting a media file to be played, is used to select one media file (among the media files of the library) that the user of the phone 10 desire(s) to let benefit to a user of the other phone 12 while being played locally, i.e. by the phone 10.

The loudspeaker 108 may be used to let listen the user of the phone 10, a song or music, as audio file or audio data of a video file, as selected media file while being played by the phone 10 and also sent (possibly almost simultaneously) to the other phone 12.

In such a latter case, the users of the phones 10 and 12 are able to listen to the played audio data at the same time.

The sending of the played audio data relating to, for example, a song may occur during an established call, i.e. during a voice call conversation between the users of the involved phones 10 and 12, while using the voice communication channel, by using at the same time audio data originating from the microphone of the phone 10 (i.e. the voice data originating from the user of the phone 10 and/or audio data originating from an environment of the user of the phone 10).

As known per se, the microphone of the phone 10 (or a microphone connected to the phone 10) is connected to analog to digital conversion means that converts an analog signal into discrete digital data, i.e. is provided with an analogical audio signal originating from the microphone and delivers corresponding digital audio data.

According to a first embodiment, the audio data originating from the microphone of the phone 10 (or a microphone connected to the phone 10) is mixed with the locally (i.e. at the phone 10) played audio data upstream from the corresponding analog to digital conversion means.

According to a second embodiment, the audio data originating from the microphone of the phone 10 (or a microphone connected to the phone 10) is mixed with the locally (i.e. at the phone 10) played audio data downstream of the corresponding analog to digital conversion means.

According to a third embodiment, the loudspeaker of the phone 10 (or a loudspeaker connected to the phone 10) emits the played audio data and the microphone of the phone 10 (or a microphone connected to the phone 10) receives the played audio data with possible voice data originating from the user of the phone 10 and/or possible audio data originating from other audio source(s) heard from the microphone of the phone 10 (or a microphone connected to the phone 10). In other words, the analog to digital conversion means receives an analog audio signal originating from the microphone of the phone 10 (or a microphone connected to the phone 10) that results from an external (i.e. outside the phone 10) "mixing" of the played audio data, with possible voice data originating from the user of the phone 10, and/or possible audio data originating from other audio source(s).

Thus, according to the first, second, or third embodiment, the sent data stream includes, besides, for example, voice data relating to a possible phone conversation, played audio data relating to the song, as played audio file.

Prior to a sending of the data stream including the played media data, the phone 10 may encrypt the data stream (to be sent). For example, the encryption of the data stream is the one relating to the voice communication channel of the "Global System for Mobile communications" (or GSM) network. When the data stream is encrypted before its sending, the other phone 12 decrypts the received encrypted data stream, so that the user of the other phone 12 perceives clear played media data.

The phone 10 includes data processing means, such as one microprocessor, at least one memory, as data storing means, and at least one Input/Output (or I/O) interface that are linked all together through a control and data bus (not represented).

The phone data storing means may comprise flash memory(ies), and/or hard disk drive(s), as mass storage memory.

The phone data storing means stores notably a sequence of binary numbers, as digital media (and content) data.

The media data may be encrypted, so as to protect access to the stored media data. The decryption of the encrypted media data may be performed by the phone 10 itself or a token, as portable object, connected to the phone 10, so as to obtain clear media data (before being played). The token may be constituted by a Subscriber Identity Module (or SIM) type smart card 16.

For simplicity, the SIM type smart card 16 is termed hereinafter the card 16 (further described hereinafter).

The media data may be stored, in a compressed or non-compressed manner, so as to reduce or not a corresponding media data file size.

The media data is in a particular format, such as an audio file format, an image file format, and/or a video file format.

The audio file format comprises, among others, a Moving Picture Experts Group-1 Audio Player 3 format, also commonly termed MP3, Waveform Audio Format (or WAV), Broadcast Wave Format (or BWF), Audio Interchange File Format (or AIFF), Windows Media Audio (or WMA), Pulse Code Modulation (or PCM) format(s).

The image file format comprises, among others, a Joint Photographic Experts Group (or JPEG), Graphics Interchange Format (or GIF), and Portable Network Graphics (or PNG) format(s).

The video file format comprises, among others, Moving Picture Experts Group 4 (or MPEG 4).

Naturally, the just aforementioned lists are not exhaustive but only for exemplifying purposes and are not considered to reduce the scope of the present invention.

The phone data storing means stores also an Operating System and, preferably, an application (developed, for example, in C, or C++, as programming language) for reading (or playing) media data and sending part or all of the read (or played) media data to the other phone 12.

The phone microprocessor executes, when triggered, this application stored preferably within the phone memories.

The phone microprocessor processes and controls data within the phone 10 and data to be exchanged with the exterior of the phone 10.

The phone I/O interface includes a radio-transceiver that contains an antenna 102.

The phone I/O interface is used to exchange data with outside of the phone 10, and notably send locally played media data to an external entity(ies).

The phone I/O interface may also be used to load the media data that is stored either locally or remotely and to be played locally.

The phone I/O interface is used to transfer, via one or several communication channels, the played media data to the other phone 12, as addressed entity.

The used communication channel(s) may be a voice communication channel, a video communication channel, and/or a data communication channel.

The video communication channel may be a video conference communication channel.

As data communication channel, it may be constituted by a voice over Internet Protocol (or IP) channel.

The antenna 102 allows communicating, via a long range radiofrequency link 11, through a first radio-telecommunication network 14, to the other phone 12, the locally played media data.

The first radio-telecommunication network 14 comprises a 2G (acronym for a second generation network, i.e. GSM for "Global System for Mobile communications") network, a General Packet Radio Service (or GPRS) network, a 3G (acronym for a third generation network, i.e. UMTS for "Universal Mobile Telephone System") network, a CDMA (acronym for a "Code Division Multiple Access") network, a High Speed Packet Access (or HSPA) network, an Evolution Data Optimized (or Ev-DO) network, a Long Term Evolution (or LTE) network, and/or an Internet protocol Multimedia Subsystem (or IMS) network.

As communication channel within notably the 2G/GPRS, 3G, HSPA or Ev-DO network, the phone 10 sends the played media data through a circuit switch infrastructure, as voice communication channel and video conference communication channel.

As communication channel within notably the GSM/GPRS, 3G, HSPA, Ev-DO, LTE, and/or Wimax network(s), the phone 10 sends the played media data through a packet switch infrastructure, as data communication channel in the form of voice over IP or a IMS service.

The antenna 102 allows communicating, via a long range radiofrequency link 19, through a second radio-telecommunication network 110, with a remote server 18 (described further hereinafter).

The second radio-telecommunication network 110 may share at least some network elements of the first radio-telecommunication network 14.

The phone I/O interface may include an antenna (not represented) that allows communicating, via a short range radiofrequency link (not represented), like a Wimax link, a Wi-Fi link, a Bluetooth and/or an Infrared link(s), to the other phone 12, the locally played media data.

The phone I/O interface includes a contact or contact-less interface, using, for example, a Universal Serial Bus (or USB) type protocol, as high speed data transfer protocol, to communicate data relating to the media files, via a bi-directional link 15, with the SIM type smart card 16, as token. The communicated data may be encrypted or not. The communicated data may be to stored in an encrypted manner or not.

As high speed data transfer, it means greater than 50 kbits/s, as bit rate.

The token, instead of the card 16, may be a USB dongle, a Secure Digital (or SD) card, and/or a Multi Media Card (or MMC).

The token may be any entity that comprises at least one memory and at least one I/O interface(s) to exchange data with the token memory(ies).

The token may further include data processing means, such as one microprocessor.

The token memory may store media files that may be selected, individually or in a grouped manner, from the phone 10, as host terminal.

The token memory may be accessed through a server, a mass storage interface, or a network drive.

The card 16, as token, can be, for example, a SIM smart card for a GSM network, a Universal Subscriber Identity Module (or USIM) for a UMTS or a LTE network, a Removable User Identity Module (or RUIM), a CDMA Subscriber Identity module (or CSIM) for a CDMA network and/or an Internet Protocol multimedia Services Identity Module (or ISIM) for IMS.

Naturally, the just aforementioned list is not exhaustive but only for exemplifying purposes and is not considered to reduce the scope of the present invention.

The card 16 is coupled with the mobile phone 10.

The card 16 includes a chip (not represented). The chip comprises a microprocessor, volatile and non volatile memories and at least one I/O interface linked together through a data and control internal bus (not shown).

The card microprocessor controls and communicates with all the components of the card 16, such as the card memories to read them and possibly write into them.

The card memories store data, in particular data relating to an Operating System and possibly one or several SIM ToolKit (or STK) applications.

The card memories may store media files. The media files of the card memories may be accessed by a user through a server, also termed Smart Card Web Server (or SCWS), or a STK menu, stored within the card 16.

The card chip communicates with the phone 10, through, for example, a contact interface (not shown) of the type ISO (acronym for « International Standard Organization ») 7816.

According to another embodiment, instead of the contact interface, the card 16 and the phone 10 are coupled through a short range radiofrequency link, like a Wi-Fi link or Bluetooth link, as a contactless interface.

The card 16 securely stores an International Mobile Subscriber Identity (or IMSI), as a unique number associated with all GSM and/or UMTS network mobile phone users. The IMSI is used to identify a subscriber in relation to at least one mobile radio-communication network 14.

The card chip may allow identifying and authenticating a carrier of the card 16, in order to be allowed to access the server 18. As soon as the user of the card 16 has been authenticated (by providing a Personal Identity Number that is stored within the card 16 and verified by the card 16), the user of the card 16 sends, through the host phone 10, to the server 18, for example, a login and/or a password, that is used by the server 18 to identify and/or authenticate the user, so as to access audio and/or video data stored at the server 18 or a memory accessible through the server 18. The login and/or a password may accompany a request for accessing one or several media files sent to the server 18, so as to receive from the server 18, as response, the corresponding media data to be played by the phone 10.

The server 18 plays the role of a media content provider, i.e. that furnishes media data to a client further to a corresponding request.

The server 18 downloads media data to the phone 10, as client that desires to fetch media data, after a possible identification and/or a possible authentication of the user of the phone 10.

The downloaded media data may be then stored locally, i.e. either within the phone memories or the card memories.

The server 18 may deliver the media data in a secure manner.

For example, the media data may be restricted in access by using Digital Rights Management (or DRM), so as to prevent a client from accessing the media data when a requesting terminal is not authorized.

The DRM may be based upon an authentication verification (carried out by the server 18 (or another server connected to the server 18)) of authentication data delivered by a recognized authority and accompanying a client request, as known per se.

The server 18 includes at least one internal memory 182 or accesses at least one external memory (not described) that records a library of media files, such as audio sample, song, music, image, video sample, film and/or movie file(s).

If the authentication verification has been successful, then the server 18 sends back to the phone 10 a message for authorizing the phone 10 to download the media file(s) to be requested by the user of the phone 10.

The server 18 is able to provide, as response to a client request, the phone 10, with an audio sample, a song, a music, an image, a film and/or a movie file(s), as media file(s).

The server 18 sends the requested media file(s) to the phone 10, possibly after having been encrypted at the server side, such as an encryption scheme of classic DRM technology.

The phone 10 receives the requested media file(s), possibly in an encrypted manner.

When the downloaded media data is encrypted, the phone 10 may verify whether the user has corresponding rights for playing the downloaded encrypted media data. To verify the user rights, the user of the phone 10 may have to give a login and/or a password that the phone 10 knows (i.e. stores possibly in an encrypted manner).

The phone 10 may decrypt by itself the received encrypted media files, so as to obtain clear media file(s) to be stored locally, i.e. either within the phone memories or the card memories.

According to a variant, the phone 10 transfers the encrypted media file(s) to the card 16. Then, the card 16 decrypts the encrypted media file(s) either before storing it(them) as clear media file(s) or before transmitting it(them) on the fly to the phone 10, as media player, so that the phone 10 is supplied with clear media file(s).

The server 18 is integrated within an entity of a system of an Internet network and/or a mobile radio-communication network.

The server 18 may be directly or indirectly controlled by a media (audio and/or video) content provider operator.

As to the other phone 12, as receiver of remotely played media data, this other phone 12 includes data processing means and at least one I/O interface linked all together through a control and data bus. The phone 12 may include data storing means. The phone 12 is preferably equipped with an antenna 122, so as to be able to receive the remotely played media data.

As man machine interface(s), the phone 12 may include a display screen 124, a keyboard 126 and/or a loudspeaker 128 and/or a microphone (not represented).

According to a variant, the other phone 12 is connected to an external display screen(s) (not represented) and/or an external loudspeaker(s), to let its user consume the remotely played media data and/or an external microphone (not represented).

The other phone 12 does not need to be equipped with a media player, so as to let benefit its user with played media data, since the media data is played remotely, namely at the side of the other phone 10, and received, through the antenna 122, (possibly just) after having being played at the side of the other phone 10.

According to an alternative, the other phone 12 receives the played media data through another I/O interface (not represented), like a wire or an infrared receiver.

Figure 2 depicts blocks that relate to functions that are exerted by the phone 10, as sender of the locally played media data and first phone.

The phone 10 comprises means 22 for accessing and selecting media data that is stored either locally, i.e. within a memory of the phone 10 or the card 16 coupled with the phone 10, or remotely, i.e. within the memory 182 comprised within the remote server 18 or an external memory (not represented) accessible from the server 18 or from another external entity, like the second phone 12.

The phone 10 comprises a media data player 24, so as to read and possibly decode a selected digital media data file into an analogical or digital audio signal and/or an analogical or digital video signal.

The analogical audio signal may be exploited by one loudspeaker(s), namely at least one loudspeaker equipping (or being connected to) the other phone 12, as played audio data receiver, and possibly another loudspeaker equipping (or being connected to) the phone 10.

The analogical video signal may be exploited by one display screen(s), namely at least one display screen equipping (or being connected to) the other phone 12, as played video data receiver, and possibly another display screen equipping (or being connected to) the phone 10.

Optionally, the media file may be stored within a local memory (not represented) once it has been played by the first phone 10 at the first phone 10 side.

The phone 10 acts as a played audio and/or video data transmitter.

The phone 10 also includes a transmitter 26 able to transmit, through a voice communication channel, a data communication channel (like voice over IP) and/or a video conference communication channel, to outside, audio and/or video data that is being played (or has been played) by the media data player 24 within a data stream.

The data stream may be the one relating to an established voice call, a data transfer, and/or an established video conference call.

It is to be noted that, once the media data is played, the phone 10 (or the card 16) may encrypt the played media data before its sending to the other phone 12, as addressed entity.

The other phone 12 may be able to decrypt (either alone or in cooperation with a token (not represented) coupled with the other phone 12) on the fly the received encrypted played media data, before sending clear media data to the loudspeaker 128 (and/or an external loudspeaker (not represented) connected to the phone 12) and/or the display screen 124 (and/or an external display screen).

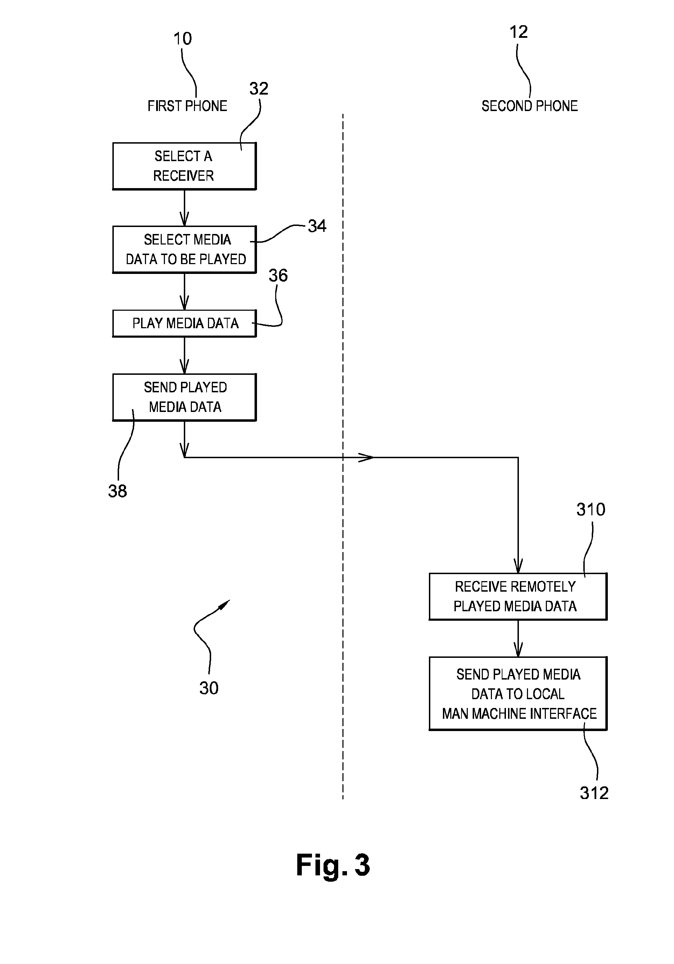

Figure 3 shows one example of a sequence 30 of steps that is implemented by the first and second phones 10 and 12, so as to let benefit the second phone user from the media data that is played at the first phone 10.

It is assumed that either the first phone 10 or the second phone 12 has called the other entity, namely respectively the second phone 12 or the first phone 10.

Thus, the users of the two phones 10 and 12 have established a phone call.

It is assumed that a user of the first phone 10 launches, through a phone Graphical User Interface and/or a dedicated key of the phone keyboard 106, an execution of the embedded application for reading (or playing) and sending the read (or played) media data.

According to an alternative, this application is launched in an automatic manner, for example, at the power on of the first phone 10 or each time a phone call is established.

During the established phone call (or before the call to be established), firstly, a user of the first phone 10 selects 32, as external entity that has to receive the locally played media data, the second phone 12 while indicating, for example, the phone number (possibly through a phonebook stored either within the first phone 10 or the card 16), before the next stated step.

During the established phone call (or before it), the user of the first phone 10 retrieves a media file that is accessible from the first phone 10 and that she or he desires to share, in a played manner, at least in part with a user of the second phone 12.

The user of the first phone 10 may have previously played the media data so as to consume the selected media data. For example, when the media data relates to a song, the phone user has thus listened to the song through the loudspeaker 108 (and/or an external loudspeaker (not represented) connected to the first phone 10), so as to ensure that she or he will select a right or appropriate song to be played that the user of the phone 10 desires effectively to let the other phone 12 user benefit from.

The user of the first phone 10 selects 34 the accessible media file either locally (stored either by the first phone 10 or the card 16) or remotely (through the remote server 18). The selection 32 is performed at the first phone 10 side through the use of the keypad 106 (or any other selecting means, such as through a rolling button, voice recognition means, an interactive sensitive display screen, a phone shaking, and/or a phone moving (not represented)).

According to another embodiment, the media file selection step 34 and the other phone selection step 32 are inverted, i.e. the selection of the media file to be played is carried out before the selection of the other phone, as external entity.

Then, the first phone 10 plays 36 the selected media file by letting possibly its user consuming, in a simultaneous manner, the played selected media file while using the loudspeaker 108 and/or the display screen 104 (and/or an external loudspeaker and/or an external display screen connected to the first phone 10).

The first phone 10 sends 38, through the mobile radio-telecommunication network 14, to the second phone 12 the selected media file that is currently being played at the first phone 10 by inserting the played media data into a data stream to be sent through a voice communication channel used by the established phone call.

According to an alternative, the played media data is inserted within a data stream to be sent though a voice over IP data channel or a video conference communication channel.

Then, the second phone 12 receives 310 the remotely played media data.

The second phone 12 sends 312 to the local man machine interface, such as loudspeaker 128 and/or the display screen 124 (and/or an external loudspeaker(s) and/or an external display screen(s) (not represented) connected to the second phone 12) the played media data, so that a user of the second phone 12 consumes the played media data.

Consequently, the user of the second phone 12 benefits, in a user friendly manner, from media data that is being played at the first phone 10.

As a matter of fact, on the one hand, the user of the second phone 12 may not be involved in any user action to benefit from the remotely played media data, and on the other hand, the second phone 12 does not need to be a high end mobile phone since the second phone 12 has not to be equipped with any media player.

The invention allows thus benefiting remotely from played media data.

The audio data may originate, in a simultaneous manner, on the one hand, from a microphone (equipping the first phone 10 and/or an external microphone (not represented) being connected to the first phone 10) and, on the other hand, the played audio data.

Consequently, the user of the first phone 10 may continue to speak while the user of the second phone 12 hears, besides the first phone user, as its interlocutor, the remotely played audio data, as they were both together at the same place, and is hearing the same played audio data at the same time while hearing the user of the first phone 10.

Likewise, the video data may originate, in a simultaneous manner, on the one hand, from a camera (equipping the first phone 10 and/or an external camera (not represented) being connected to the first phone 10) and, on the other hand, the at least part of the played video data.

Consequently, the user of the first phone 10 may continue to be filmed by a camera (not represented) while the user of the second phone 12 sees, besides the first phone user, as its interlocutor, and the remotely played video data at the same time, by using for example the display screen 124 of the second phone 12 or and/or an external display screen (not represented) connected to the second phone 12.

## Claims

1. A device (10) for providing played audio and/or video data, **characterized in that** the device is adapted to:
- play (24) audio and/or video data, and
- send (26) at least a part of the played audio and/or video data.

2. Device according to claim 1, wherein the device comprises means for storing at least a part of the audio and/or video data to be played.

3. Device according to claim 1 or 2, wherein the device comprises means (22) for selecting audio and/or video data to be played.

4. Device according to any of claims 1 to 3, wherein the device comprises:
- means for verifying whether the audio and/or video data to be played has or not been previously encrypted;
- means for decrypting the encrypted audio and/or video data to be played, and/or
- means for verifying whether a device user has rights for accessing the audio and/or video data to be played.

5. A method for providing played audio and/or video data,
**characterized in that** the method comprises the following steps:
- a first device (10) plays (36) audio and/or video data, and
- the first device sends (38) to at least one second device (12) at least a part of the played audio and/or video data.

6. Method according to claim 5, wherein, a token (16) being coupled to the first device, the token stores at least a part of the audio and/or video data to be played.

7. Method according to claim 5, wherein the first device being connected to an external server (18), the server stores at least a part of the audio and/or video data to be played.

8. Method according to claim 7, wherein the first device or a token coupled to the first device sends to the external server a request for accessing the at least a part of the audio and/or video data to be played, the server sends back to the first device a response with the at least a part of the audio and/or video data to be played.

9. Method according to any of claims 5 to 8, wherein the first device sends, through a voice communication channel, a video conference communication channel, and/or a data communication channel, to the second device the at least a part of the played audio and/or video data.

10. Method according to any of claims 5 to 9, wherein, the first device comprising or being connected to a microphone and/or a camera, the first device sends simultaneously to the at least one second device,
- audio data originating from, on the one hand, the microphone and, on the other hand, the at least part of the played audio data, and/or
- video data originating from, on the one hand, the camera and, on the other hand, the at least part of the played video data.
